# EUROPEAN PATENT APPLICATION

(11) **EP 2 147 852 A1**
(43) Date of publication of application: **27.01.2010**
(21) Application number: 09166212.2
(22) Date of filing: 23.07.2009
(51) Int. Cl.: B62K 5/04, B62K 3/00

(54) **Recumbent Tricycle**

(30) Priority: 23.07.2008 US 135718 P
(71) Applicant: Merette, Marcel, Alma, Québec G8B 5V2 (CA)
(72) Inventor: Merette, Marcel, Alma, Québec G8B 5V2 (CA)
(74) Representative: Partio, Erja

(57) **Abstract**

A human-powered recumbent tricycle which leans as it turns is disclosed. It consists of a front and a rear section, connected by means of a pivot joint (150), which is inclined towards the rear section and, as a result, permits the front section to lean as it turns. The front section consists of a frame (10), drivetrain (30), seat (40) and front wheel (20). The drivetrain powers the tricycle in a manner similar to a bicycle. The rear section consists of a frame (100) and two freely-rotating wheels (110,120), with a steering control bar (160), which the rider uses to steer the vehicle, mounted underneath the rear frame (100). Due to the inclined nature of the pivot joint (150), the front section leans as it rotates relative to the rear section. To accommodate a number of rider heights, the seat position is adjustable, and the rear frame (100) may carry a number of different structures, such as a cargo container or a set of seats for transporting people.

## Description

### Field of the Invention

The invention relates generally to human-powered transportation and specifically to delta-configured recumbent tricycles.

### Background of the invention

Bicycles have become a common mode of human-powered transportation. In conventional so-called upright bicycles, such as multi-speed racing bicycles and mountain style bicycles, the seat is positioned between and above the wheels while, the pedal assembly is positioned essentially vertically downward from the scat.

Conventional so-called upright bicycles suffer from a set of drawbacks. One of the main drawbacks associated with the so-called upright bicycles is that a relatively high proportion of the effort expanded by the rider is used to overcome wind resistance. Another drawback of the conventional upright bicycles relates to the fact that the rider sits relatively high away from the ground and that in the event that a high degree of deceleration is achieved, the rider may be projected forwardly. Furthermore, hard braking can also lead to severe skidding of the tires. A still further drawback of the conventional so-called upright bicycles is the general lack of ergonomic characteristics associated with the rider's position. An upright bicycle is also difficult to balance when at rest and the rider typically has to lower his or her foot to balance the bicycle. When carrying cargo on the frame itself, the upright bicycle becomes all the more unstable in motion as the added weight shifts from side to side.

In order to overcome the above-mentioned disadvantages, another type of human-powered transport has evolved throughout the years, namely the so-called recumbent tricycle. A recumbent tricycle differ from a conventional upright bicycle in that the rider sits behind the foot pedals in a recumbent or reclining position on a seat that is usually provided with a backrest, and the tricycle has three wheels. The recumbent tricycle may have two wheel in front and one in the rear, known as a "tadpole" design, or two wheels in the rear and one in the front, known as a "delta" design.

Unlike in an upright bicycle in which the rider's legs extend generally downwardly, in a recumbent tricycle, the rider's legs extend forwardly substantially parallel to the ground. As such, the combined frontal area of a recumbent tricycle and rider is typically substantially less than in a conventional upright-type bicycle, thus causing less wind resistance.

Furthermore, a lower center of gravity, greater tire contact due to three wheels and a feet-forward riding position mean that a higher degree of deceleration can be achieved without the rider being projected forward, as he or she might on a conventional bicycle. The risk of injury to the body due to contact with the handlebars, brakes and gear shift levers is reduced in the event that the rider is thrown forward. The feet being positioned in front of the rider, they are most likely to make contact in a head-on collision, often bracing the rider and preventing substantial injury. The rider rarely goes over the handlebars, resulting in fewer head injuries, and the low centre of gravity means the rider has a reduced distance to fall before contacting the ground.

Moreover, during pedalling, the loads applied to the rider's body against the seat in reaction to the forces applied to the foot pedals by the rider's legs are transmitted to the seat through the hips and shoulders of the rider. This enables the upper torso and arms of the rider to remain relaxed while full power is being applied to the foot pedals.

Furthermore, the seat of a recumbent tricycle typically supports more of the rider's body area, including his back, so that the weight of the rider is distributed over a larger surface for greater comfort. This may also be more suitable for people with balance or limb disabilities. Also, the recumbent position allows for greater thrust power since the back of the rider can be braced against the seat. In an upright bicycle, the maximum thrust is limited by the weight of the rider, although this can be helped if the rider pulls up on the handlebars while pushing down on the pedals.

A recumbent tricycle in the delta configuration, with two rear wheels and one front wheel, has some specific advantages relative to the tadpole configuration, such as the possibility of an expanded cargo capacity.

Although recumbent tricycles have been the subject of previous patents and patent applications, some of the prior art recumbent designs suffer from a further set of drawbacks. For instance, U.S. Patent No. 6,062,581 describes a recumbent tricycle in a delta configuration, in which only the front wheel turns in the direction in which the rider would like to go, and the front portion of the frame remains in a forward orientation. This type of steering is unstable when cornering at higher speeds because the front portion of the frame is unable to lean into the turn.

Another example, U.S. Patent No. 4,826,190 discloses a tricycle in a delta configuration, with rear-wheel drive and a fork-mounted front wheel that pivots by means of turning the fork. A rear-wheel drive mechanism for a tricycle in a delta configuration is complex, expensive and requires heavier hardware. For instance, it will require a full axle to transmit power to both wheels, and a differential gear, for example, to permit the wheel on the outside of the turn radius to turn faster than the wheel on the inside of the turn radius. It will also call for a longer drivetrain to transfer power to the rear from the front crankset.

Yet another example of the prior art, U.S. Patent No. 4,456,277 discloses a tricycle in a tadpole configuration, with the two front wheels serving as the drive wheels. Again, this type of configuration requires a differential which adds cost, and it is more difficult to get into and out of than a delta configuration. The tadpole configuration also does not offer an obvious way to store and carry cargo.

Finally, U.S. Patent No. 4,432,561 discloses a tricycle in delta configuration, which contains a center joint so that the seat, pedals and front wheel pivot in the direction in which the rider would like to travel. However, the rear wheels are connected by an axle, which once again, necessitates the use of a differential for turning efficiently, and the design does not appear to hold cargo. In addition, it employs the use of two pivots to produce a turning motion, where a single pivot would be more reliable and effective.

### Summary of the invention

Accordingly, it is the object of this invention to provide a human-powered delta recumbent tricycle which is cost-effective, is able to carry cargo and enables the rider to lean the front end into a turn to provide stability and comfort at higher speeds.

The present invention, a delta-configured recumbent tricycle, consists of a front and a rear section, connected by means of a pivot joint, which is inclined towards the rear section and, as a result, permits the front section to lean as it turns. The front section consists of a frame made of metal or carbon fiber, which encompasses a front wheel, a crankset and a seat. The crankset consists of pedals which are pushed by a rider's feet and turn a chainring, which in turn moves a chain and the front wheel, in a manner similar to a bicycle. A wheel guard prevents the rider's feet from entering the wheel spokes. The rear section consists of a frame also made of metal or carbon fiber, and two freely-rotating wheels connected to the frame by means of spindles. The front and rear sections are pivotally connected by means of a pivot joint, and mounted underneath the rear frame is a steering control bar, which the rider uses to steer the vehicle. When he or she pushes on one side, the tricycle will steer into the opposite direction. Due to the inclined nature of the pivot joint, the front section leans as it rotates relative to the rear section. Rubber bumpers prevent an over-rotation of the front section from damaging the rear frame. The pivot joint may also contain elastomer to reduce movement and vibration between the front and rear frame sections. Two gas or hydraulic shock absorbers may be mounted between the front and rear frame to stabilize the tricycle. To accommodate a number of rider heights, the seat position is adjustable, and the rear frame may carry a number of different structures, such as a cargo container or a set of seats for transporting people.

### Brief Description of the Drawings

It will now be convenient to describe the invention with particular reference to one embodiment of the present invention. It will be appreciated that the diagrams relate to one embodiment of the present invention only and are not to be taken as limiting the invention.
**Figure 1** is a perspective view of the Recumbent Tricycle, according to one embodiment of the present invention;
**Figure 2** is a side view of the Recumbent Tricycle, according to one embodiment of the present invention;
**Figure 3** is a top view of the Recumbent Tricycle, according to one embodiment of the present invention;
**Figure 4** is a top view of the Recumbent Tricycle with the seat removed, according to one embodiment of the present invention;
**Figure 5** is a top view of the Recumbent Tricycle in a turned position, according to one embodiment of the present invention;
**Figure 6** is a top view of the Recumbent Tricycle in a turned position with the seat removed, according to one embodiment of the present invention;
**Figure 7** is a perspective view of the pivot joint of the Recumbent Tricycle, according to one embodiment of the present invention;
**Figure 8** is a perspective view of the pivot joint of the Recumbent Tricycle, according to one embodiment of the present invention; and
**Figure 9** contains a rear left and front right perspective view of the pivot housing of the Recumbent Tricycle, according to one embodiment of the present invention.

### Detailed Description of the Drawings

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art.

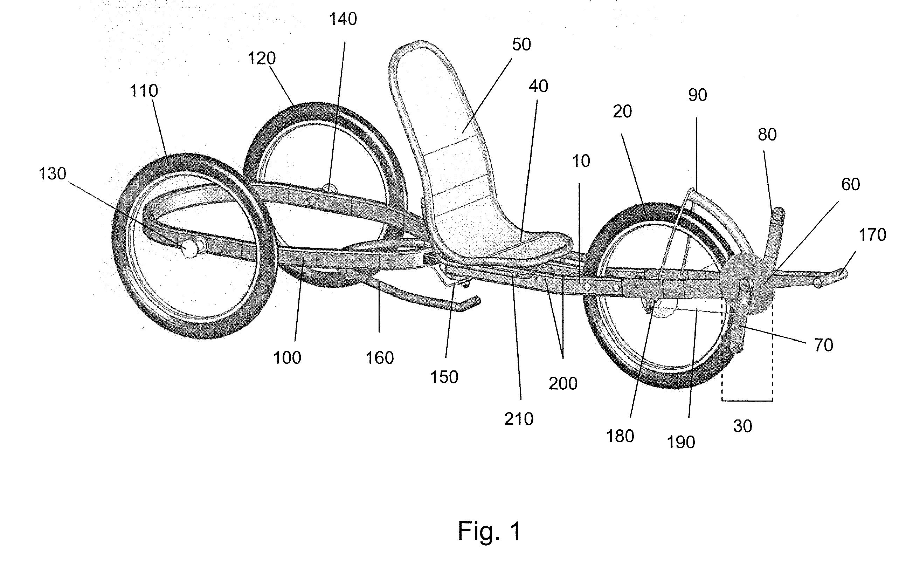

With reference to Figure 1 and according to one embodiment of the present invention, the recumbent tricycle consists of a front and a rear section, connected by means of a joint. The front section consists of a front frame **10** made of metal or carbon fiber, front wheel **20,** crankset **30,** a seat **40** and a backrest **50.** The crankset **30** consists of a bottom bracket (not shown), a chain ring **60,** a first crank arm **70** and a second crank arm **80** and pedals (not shown). Pedals (not shown) are mounted to the crank arms **70** and **80** by means of spindles (not shown) about which the pedals may rotate. The front section also contains a wheel guard **90** to prevent the rider's feet from entering the wheel spokes (not shown). The rear section consists of a rear frame **100** made of metal or carbon fiber, first and second rear wheels **110** and **120,** first and second rear axles **130** and **140.** The front frame **10** and rear frame **100** are pivotally connected by means of a pivot joint **150.** Mounted underneath the rear frame **100** is a steering control bar **160.**

The front frame **10** extends forward into a front bumper **170** to prevent damage to the crankshaft in the event of a front collision

Under normal use, the rider sits on the seat **40,** with his or her back against the backrest **50,** and places his or her feet on the pedals (not shown), with his or her hands holding the steering control bar **160.** The crankset **30** is operatively connected to the front wheel **20.** which allows power to be transferred from the rider's legs to the drivetrain. The crankset **30,** a sprocket **180,** and a chain **190** connecting both the crankset **30** and the sprocket **180,** allows a rider to move the front wheel **20** in a circular motion as would be expected when operating the present invention. The sprocket **180** is connected to the front wheel freewheel (not shown), and this arrangement permits the front wheel **20** to be driven while the crankset **30** is turning and coast when it is not turning. The front wheel **20** is mounted on a front axle (not shown).

The rear axles **130** and **140** are of a split-axle design, which spin independently of one another, permitting the invention to dispense with a differential between the rear wheels for efficiency in turning. The rider uses the steering control bar **160** to control the direction of the tricycle. When he or she pushes on one side, the tricycle will steer into the opposite direction. The same affect can be achieved by leaning the body in the direction in which it is desired to turn. The pivot joint **150** allows the front frame **10** to leaningly pivot relative to the rear frame **100,** as it is inclined relative to the front frame **10,** so that when the front section turns away from the center axis, it necessarily leans laterally. Leaning the front section permits the centrifugal forces generated in a turn to be absorbed by the rider's body in a vertical fashion, in-line with the rider's spine.

To accommodate a number of rider heights, the seat **40** position is adjustable, and the rider may make adjustments in the lean or lumbar support of the backrest **50.** The front frame **10,** on which the seat **40** rests, has a multitude of seat adjustment holes **200,** and to adjust the seat position, the lockable seat adjustment pins **210** may be placed in a set of holes farther back or farther forward. Furthermore, the rear frame **100** may be modified to carry out a number of purposes, for instance, it may support a container (not shown) which may carry groceries, or a set of seats (not shown) for providing a multiple-person transportation device.

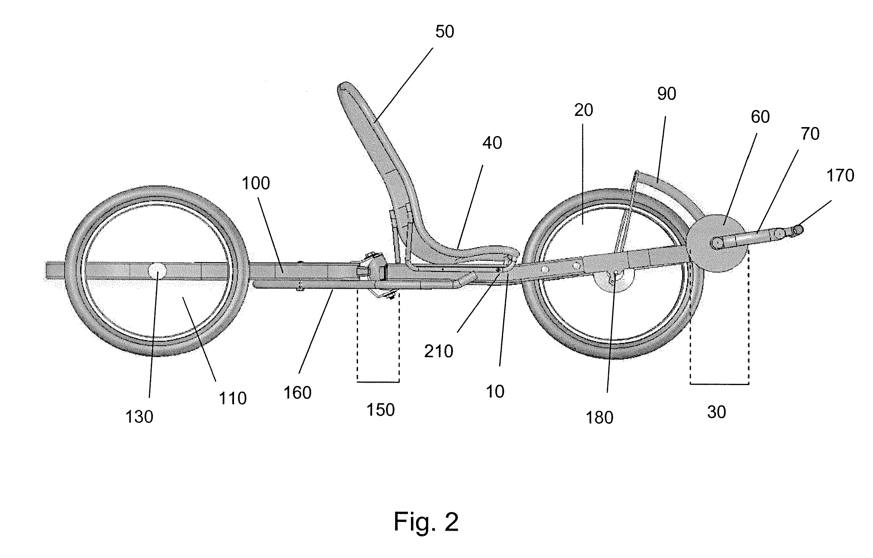

With reference to Figure 2 and according to one embodiment of the present invention, the seat **40** is shaped in an ergonomic way, so that the rider is comfortable using the tricycle to travel longer distances. As mentioned above, the seat **40** and backrest **50** may be adjustable in position along the frame **10** using the seat adjustment pins **210** and seat adjustment holes (not shown) and in lean angle and lumbar support, for example. In one embodiment, the angle between the seat **40** and backrest **50** is 105°, with the backrest forming an angle of between 55° and 75° with the horizontal plane of the tricycle. In some embodiments the angles are set and may not be adjusted, and in other embodiments these angles may be adjustable depending upon the rider's preference.

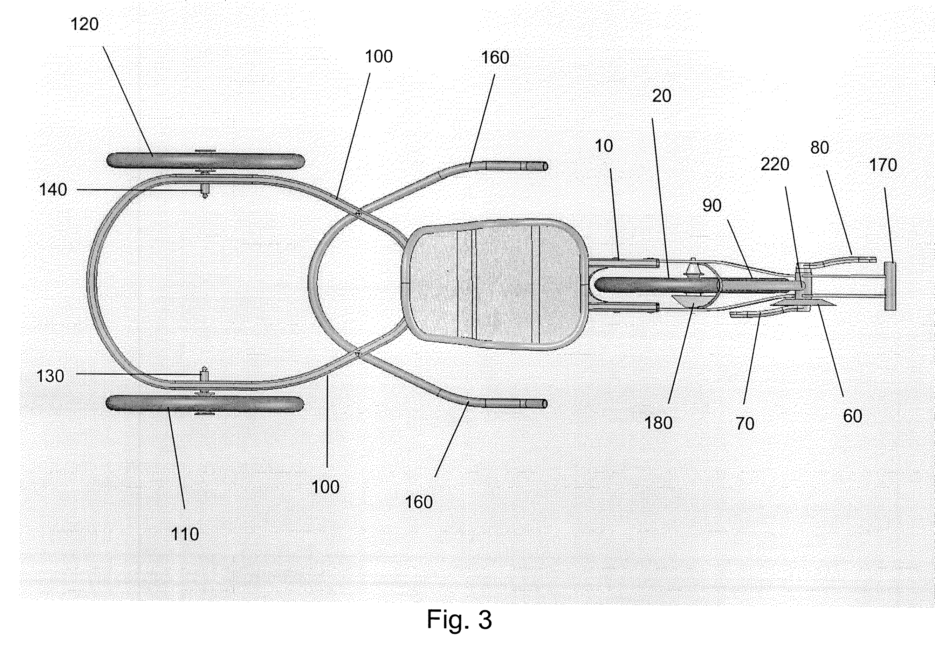

With reference to Figure 3 and according to one embodiment of the present invention, the steering control bar **160** is affixed to the rear frame **100** by bolts or other fastening means, such as welds, which would be known to a person skilled in the art. The rear frame **100** is of such a shape, in this embodiment a rounded bell shape that allows it to provide rigidity to the rear section to encourage predictable handling and provide a solid support for the cargo- or personnel-carrying containers mounted on the rear. Visible in this figure, the bottom bracket **220** connects both cranks, and contains bearings allowing the crankset to rotate.

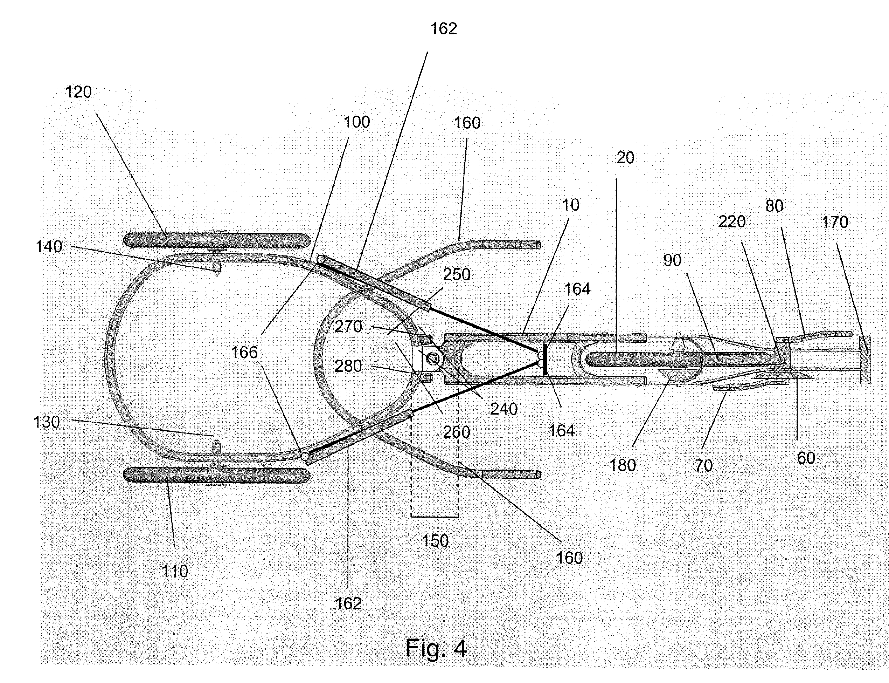

With reference to Figure 4 and according to one embodiment of the present invention, with the seat removed it is possible to see how the pivot joint **150** interconnects the front frame **10** and the rear frame **100.** The pivot joint barrel **230** is mounted at an incline relative to the front portion, and is welded to support **240,** which forms part of the front frame **10.** To the rear frame are attached by weld or otherwise an upper flange **250** and lower flange (not shown) that respectively close the top and bottom of the barrel **230.** Through the upper flange **250** and lower flange (not shown), and the axis of barrel **230,** is passed a pin **260** which is affixed to the upper flange **250** and lower flange (not shown), but permits free rotation of the barrel **230** around the axis of the pivot joint, permitting the front section of the recumbent tricycle to rotate relative to the rear section. The movement around the pin may be facilitated by the use of bearings, or other means appreciated by those skilled in the art. Left and right bumpers **270** and **280** of rubber or plastic are affixed to prevent over-rotation of the front section relative to the rear section of the tricycle.

In another embodiment, gas or hydraulic shock absorbers **162** connected between the front frame **10** and rear frame **100** help to stabilize the vehicle when it is tracking in a straight line. Front brackets **164** are bolted or welded on the front frame **10** and fasten the hydraulic shock absorbers to the front frame **10.** Rear brackets **166** are bolted or welded to the rear frame **100** and fasten the hydraulic shock absorbers to the rear frame **100.** Both sets of brackets **164, 166** may contain ball joints to permit varying degrees of leaning. The resistance of the hydraulic shock absorbers may vary between 50 and 120 psi, and may be adjusted by the user. A person skilled in the art would appreciate that gas or hydraulic shock absorbers may be substituted with another type of shock absorber without varying from the scope of the invention.

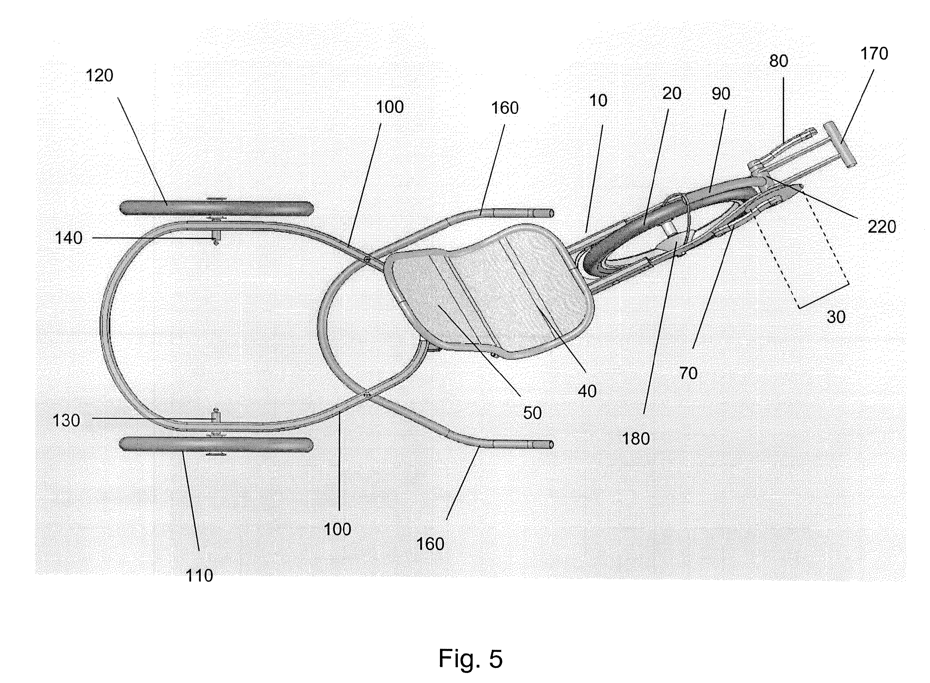

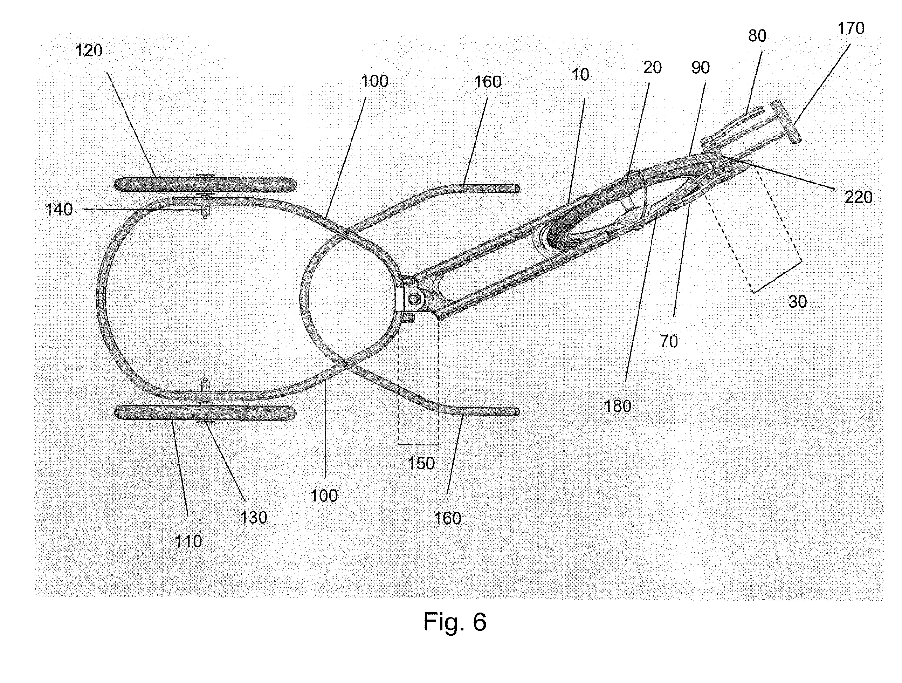

With reference to Figures 5 and 6 and according to one embodiment of the present invention, the leaning effect of the front frame **10** induced by the inclined pivot joint **150** (not shown in Figure 5) can be seen with and without the seat **40.** As can be seen, the steering control bar **160** remains unmovingly affixed to the rear frame **100** while the front section turns, and this allows the rider to control the lean of the front section and tightness of the turn.

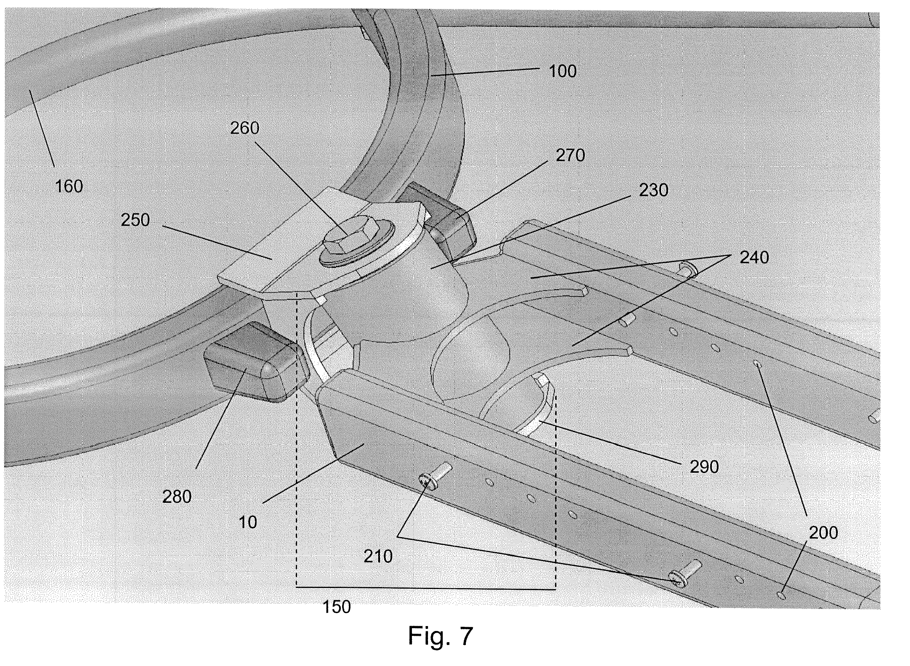

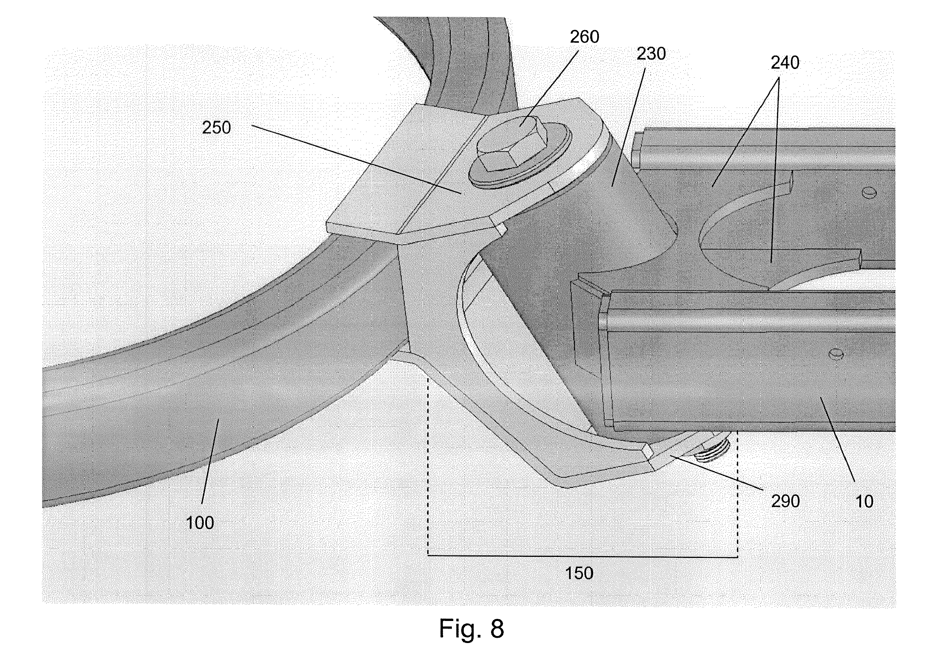

With reference to Figures 7 and 8 and according to one embodiment of the present invention, the pivot joint **150,** which pivotally interconnects the front frame **10** and rear frame **100,** consists of a barrel **230** which is welded to the front frame **10** by means of a support **240,** and an upper flange **250** and lower flange **290,** both connected to the pivot housing **300,** which flanges respectively fit over the top and bottom of the barrel **230,** and a pin **260** which is fastened through the upper and lower flanges **250** and **290** respectively that allows the front frame **10** to pivot relative to the rear frame **100.** The upper flange **250** and lower flange **290** are affixed to the welded to the rear frame **100.** The left bumper **270** and right bumper **280** (bumpers **270** and **280** not shown in Figure 8) are made from rubber or plastic and prevent the front frame **10** from over-rotating relative to the rear frame **100.**

The axis of the pivot joint **150** is inclined relative to the front frame **10,** and allows the front section to leaningly rotate relative to the rear section around the pivot joint **150.** In the present embodiment, the pivot joint **150** is oriented in incline relative to the front frame **10** at an angle of approximately 60° using the rear frame as a reference. A person skilled in the art would know that the angle may be altered, and a corresponding alteration in handling of the tricycle will be effected. A shallower inclination will produce more leaning of the front section on a given turn. A steeper inclination in the pivot joint **150** will produce less leaning of the front section on a given turn.

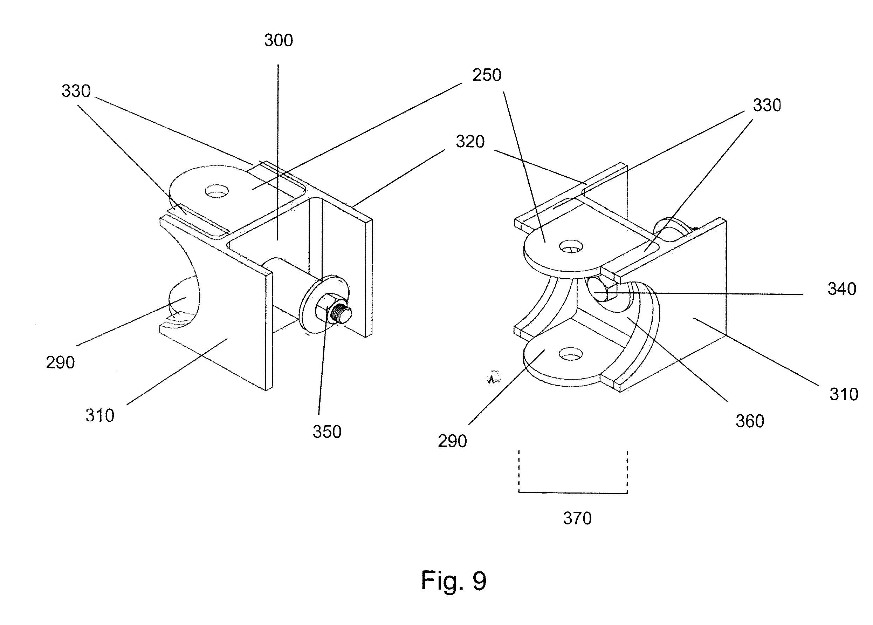

With reference to Figure 9 and according to another embodiment of the current invention, vibration and movement within the pivot joint **150** (not shown in its entirety), the means by which the front frame and rear frame are connected, may be minimized. In Figure 9 the pivot housing **300** is shown from both a rear left perspective and a front right perspective. The pivot housing **300** is welded to the rear frame **100** (not shown) by means of right weld tab **310** and left weld tab **320.** The rear frame **100** (not shown) is welded to each tab, respectively, on the outside of the tab. The rear frame **100** (not shown) does not continue through the pivot housing **300** in this embodiment. The combination of the upper and lower flanges **250, 290** and the flange connector **360** (all in one piece) provides a flange brace **370.** The flange brace **370** is affixed to the pivot housing **300** by means of a connection bolt **340** and connection nut **350.** Movement and vibration of the pivot are damped by elastomer dampers **330** fixed between the flange brace **370** and the pivot housing **300.** The elastomer dampers **330** absorb the vibration and produce a smoother ride for the operator. The elastomer dampers **330** also permit a vertical displacement of the flange brace **370** relative to the pivot housing **300** to reduce the effect of the pivot angle, especially in the case of a sudden turn, such that the effective angle between the pivot housing **300** and flange brace **370** may vary up to 15° as a result of the vertical displacement of the flange brace **370.** A person skilled in the art would appreciate that elastomer may be replaced by another material of similar vibration-absorptive properties, such as a Rosta^{™} rubber suspension unit.

Many modifications and other embodiments of the invention will come to the mind of a person skilled in the art having the benefit of the teachings presented in the foregoing description and associated drawings. Therefore, it is understood that the invention is not to be limited to the specific embodiment disclosed, and that modifications and embodiments are intended to be included within the scope of the appended claims.

## Claims

1. A three-wheeled, human-powered vehicle, which comprises
a front frame section having a drive wheel;
a rear frame section having two wheels; and
a pivot joint;
wherein the pivot joint joins the front frame section and rear frame section, and is inclined relative to the front frame section, such that the front frame section may leaningly pivot relative to the rear frame section.

2. The vehicle according to claim 1 wherein one or more bumpers are positioned on the rear frame section in close proximity to the pivot joint.

3. The vehicle according to claim 1 wherein one or more steering control bars are fixed to the rear frame section.

4. The vehicle according to claim 1 wherein a crankset is operatively connected to the drive wheel on the front frame section.

5. The vehicle according to claim 1 wherein an adjustable seat is affixed to the front frame section.

6. The vehicle according to claim 1 wherein the pivot joint is inclined at an angle relative to the front frame section between 50 and 80 degrees.

7. The vehicle according to claim 1 wherein the pivot joint is inclined at an angle relative to the front frame section of 60 degrees.

8. The vehicle according to claim 1 wherein the pivot joint comprises a pivot housing and a flange brace.

9. The vehicle according to claim 8 wherein the pivot housing has elastomer dampers.

10. The vehicle according to claim 8 wherein the flange brace is capable of vertical displacement such that an angle between the pivot housing and the flange brace is alterable up to 15 degrees.

11. The vehicle according to claim 1 wherein shock absorbers are connected between the front frame and rear frame.
